# EUROPEAN PATENT APPLICATION

(11) **EP 0 838 622 A1**
(43) Date of publication of application: **29.04.1998**
(21) Application number: 97306702.8
(22) Date of filing: 01.09.1997
(51) Int. Cl.: F16K 47/02

(54) **High energy loss flow control devices**

(30) Priority: 25.10.1996 GB 9622230
(71) Applicant: Severn Glocon Limited, Gloucester, GL1 5RE (GB)
(72) Inventor: Gates, Eric, Brighouse, West Yorkshire, HD6 4LA (GB)
(74) Representative: Higgins, Michael Roger

(57) **Abstract**

A high energy flow control device comprises flow control means 18 having a series of passageways 38 therethrough for flow of fluid between an inner space 25 and an outer space 39. The passageways 38 impart repeated changes of direction to the fluid flows passing therealong. The passageways 38 communicate with transversely extending intermediate channels 36 and 37 within the flow control means in order to permit interaction between the fluid flows along adjacent passageways by way of the channels.

## Description

This invention relates to high energy flow control devices and is concerned more particularly, but not exclusively, with high energy pressure control valves for effecting energy dissipation in high energy flows of liquids and gases.

It is known to control high energy fluid flows, for example the gas output from a gas compressor, by passing the fluid through a high energy pressure control valve incorporating a stack of annular plates defining a series of generally radially extending tortuous passageways for the fluid which impart repeated changes of direction to the fluid and which thereby serve to dissipate a proportion of the fluid energy. It is also known for such a pressure control valve to be adjustable in dependence on the sensed pressure of the fluid external to the valve in order to vary the number of passageways available for fluid flow through the valve so as to control the pressure or flow of the fluid downstream of the valve within an acceptable range. Such high energy pressure control valves are used to reduce the fluid pressure to manageable levels and to thereby avoid a number of problems which may otherwise be experienced in applications in which high energy fluid flows are present. Such problems include vibration and noise, erosion and cavitation which can lead to greatly reduced life of the component parts associated with the fluid flow, as well as leading to unpredictable fluid flow behaviour.

Known high energy pressure control valves incorporate annular plates or concentric sleeves which are subject to wear in use and which require replacement by fresh plates as a routine maintenance operation. The installation and maintenance of such plates presents certain practical difficulties, particularly in relation to the sealing between plates and their relative angular registration.

It is an object of the invention to provide an improved high energy flow control device which is capable of obviating certain of the problems encountered with known devices.

According to the present invention there is provided a high energy flow control device as defined in the accompanying claims.

The provision of intermediate coaxial annular channels in the flow control means of such a device is advantageous since it allows the fluid flows along adjacent passageways to intermingle in such a manner as to increase the dissipation of the energy of the fluid flows whilst at the same time providing automatic pressure balancing of the fluid flows. Furthermore, in the case in which the passageways are defined between a stack of annular plates, the provision of the annular channels obviates the need for angular registration of adjacent plates relative to one another during installation or maintenance.

In order that the invention may be more fully understood, a preferred high energy pressure control valve in accordance with the invention will now be described, by way of example, with reference to the accompanying drawings, in which:
Figure 1 is an axial section through the valve;
Figure 2 is a schematic diagram showing a radial section through part of the trim stack of the valve;
Figure 3 is a schematic diagram of a detail of the trim stack; and
Figures 4, 5 and 6 show respectively an apertured plate, a blanking plate and a part section of the trim stack of the valve.

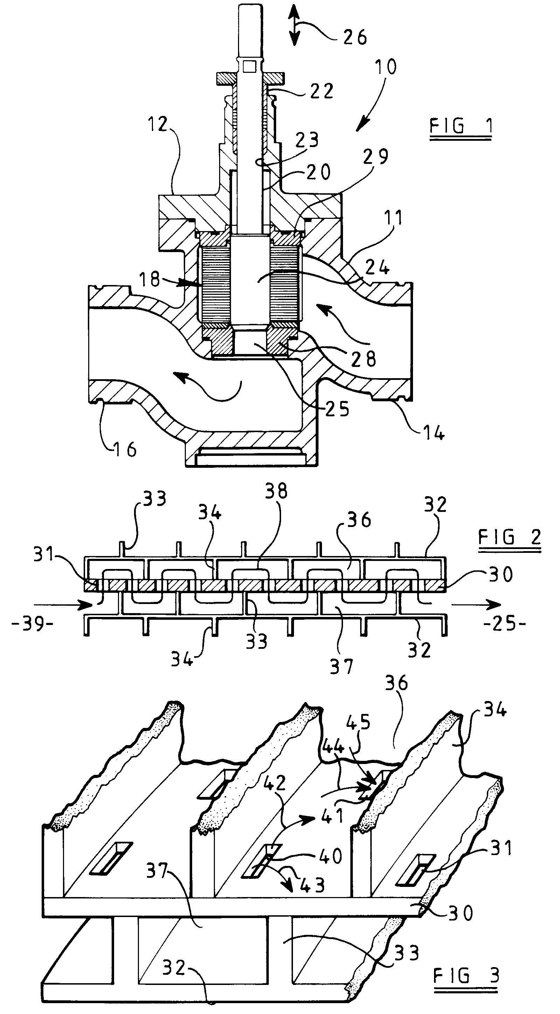

Referring to Figure 1 the control valve 10 comprises a valve housing 11 having a cover 12 and inlet and outlet ports 14 and 16 to which pipes are connectable for conducting the fluid flow to and from the valve 10. Although the ports 14 and 16 serve as inlet and outlet ports in the described arrangement, it should be appreciated that the value 10 is bidirectional and that the flow direction through the valve can be selected according to the fluid type and application. A trim stack 18 is detachably mounted within the valve housing 11, and a valve plug 20 extends through a sealing member 22 and through a bore 23 in the cover 12 so that its end part 24 is accommodated within an inner space 25 within the trim stack 18. The trim stack 18 is located so that the fluid flowing from the inlet port 14 to the outlet port 16 when the valve 10 is open must pass through the trim stack 18, and the valve plug 20 is movable axially as indicated by the arrows 26 in order to adjust the throughflow cross-section of the trim stack 18. Furthermore the end part 24 of the valve plug 20 is engageable with a valve seat 28 when in the closed position shown in the figure, in order to close off the valve 10.

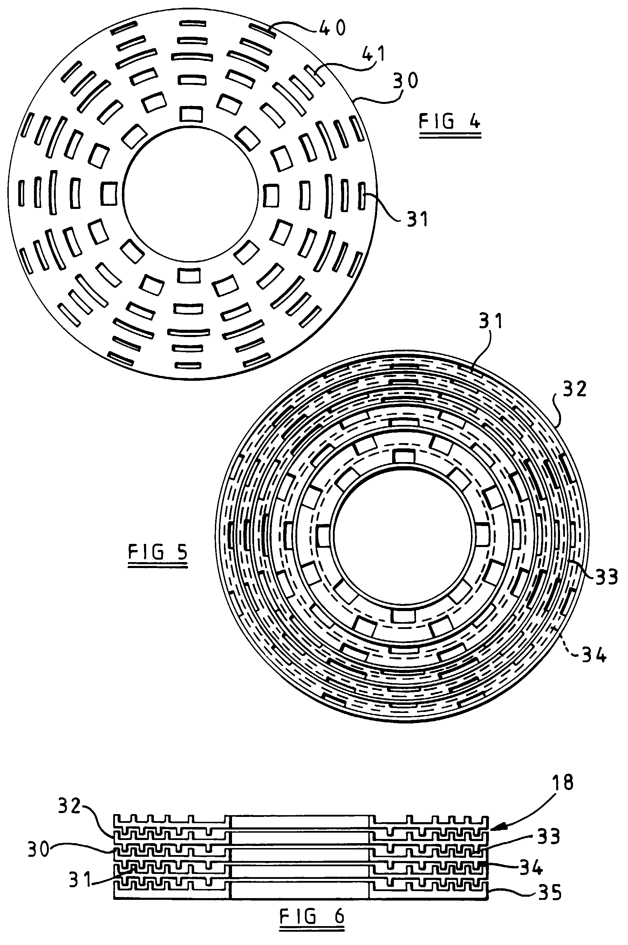

The trim stack 18 comprises a stack of annular plates consisting of apertured plates 30, one of which is shown in Figure 4, alternating with blanking plates 32, one of which is shown in Figure 5. Each apertured plate 30 has apertures 31 in the form of slots or holes which are equiangularly spaced around the plate 30. The final size, position and number of the apertures in the plate 30 is dependent on the flow rates, expansion rates and/or pressure reducing characteristics allocated to the plate 30. Each banking plate 32 is unapertured (although Figure 5 shows the apertures 31 of the plate 30 superimposed on the plate 32 in order to show the positions of these apertures 31 relative to the plate 32) but is provided with a series of first annular dividing walls 33 on one side of the plate 32 and a series of second annular dividing walls 34 (shown in broken lines) on the other side of the plate 32. Figure 6 shows a section through a part of the trim stack 18 showing the apertured plates 30 alternating with the blanking plates 32. It will be appreciated that the bottom blanking plate 35 is of slightly different form in that it is not provided with dividing walls on its lower surface.

As will be appreciated more easily from the diagrammatic radial section of Figure 2, concentric annular channels 36 are defined on one side of each apertured plate 30 by the dividing walls 34 on an adjacent blanking plate 32, and further concentric annular channels 37 are defined on the other side of the apertured plate 30 by the dividing walls 33 on a further adjacent blanking plate 32. Furthermore the annular channels 36 and 37 on opposite sides of the apertured plate 30 communicate with one another by way of the apertures 31 in the apertured plate 30 so as to define a series of tortuous passageways 38 for flow of fluid from the outer space 39 surrounding the trim stack 18 inwardly to the inner space 25 within the trim stack 18 (when the valve is opened from the fully closed position shown in Figure 1). As shown more clearly in Figure 6, the annular channels 36 and 37 increase progressively in radial width as the channel radius decreases in order to compensate for the decreasing circumference of the radially inner channels.

As best shown by the diagrammatic view of Figure 3 (in which part of the upper blanking plate 32 is shown removed in order to render the figure easier to read) the apertures 31 through the apertured plate 30 which serve to interconnect the annular channels 36 and 37 comprise two sets of apertures 40 and 41 opening into each channel 36 or 37. The apertures of the first set 40 are equiangularly spaced about the plate 30, and the apertures 41 of the second set are equiangularly spaced around the plate 30 and angularly offset relative to the apertures 40 so as to subtend half the angle between adjacent apertures 40, as will be seen more clearly from Figure 4. Such an arrangement of the apertures 40 and 41 ensures that a proportion of the fluid passing from one of the annular channels 37 into an adjacent annular channel 36 by way of each aperture 40 will flow in one direction along the channel as shown by the arrow 42, whereas a further proportion of the fluid passing through the aperture 40 will flow in the opposite direction along the channel as shown by the arrow 43. Furthermore, considering the fluid flowing out of that annular channel 36 into the next adjacent annular channel 37 by each aperture 41, a proportion of the fluid flow through the aperture 41 will be from one direction along the channel as shown by the arrow 44, whereas a proportion of the fluid flow through the aperture 41 will be from the other direction along the channel as shown by the arrow 45 This will result in the intermingling of the fluid flows along the passageways so as to provide both dissipation of energy where the flows meet and automatic pressure balancing of the flows within the channels about the complete circumference of each channel. In practice it will be appreciated that the fluid flows between the apertures 40 and 41 will incorporate components which impinge on the adjacent banking plate 32 and its dividing walls 34 and which are thereby subjected to repeated changes of direction which serve to dissipate the energy of the flows. Furthermore this arrangement will ensure that the passageways for the fluid follow paths which are tortuous both in the profile shown in Figure 2 and also in profile parallel to the plates 30 and 32, as will be appreciated from Figure 3 when it is considered that the fluid flows take place alternately between the apertures 40 and 41.

Since the plates 32 are rotationally symmetrical and since the fluid flows taking place between each pair of adjacent blanking plates are quite separate from the fluid flows taking place between other pairs of adjacent blanking plates, it will be appreciated that the relative angular orientation of the plates 30 and 32 is of no significance, and thus angular registration of the plates 30 and 32 is unnecessary during assembly of the trim stack 18 on production or maintenance of the valve 10. Furthermore the fact that the blanking plates 32 engage the apertured plates 30 by means of the relatively narrow dividing walls 33 and 34 promotes sealing of the plates 30 and 32 relative to one another and means that relatively low loading pressures need to be applied to the trim stack 18 in order to seal adjacent plates 30 and 32 relative to one another. Thus the trim stack 18 can be formed simply by assembling the plates 30 and 32 relative to one another (possibly with a locating rim on each plate engaging within a locating groove in the adjacent plate to provide coaxial centring) with the complete stack of plates 30 and 32 being sandwiched between the valve seat 28 and an annular top plate 29 (see Figure 1). The complete trim stack 18 is then clamped in position by the cover 12 which may be engageable with the valve housing 11 by means of a screwthreaded connection. As shown in Figure 4 the apertures 31 are slot-shaped in order to increase their wetted perimeter.

A known actuator may be provided for axially displacing the valve plug 20 in dependence on a control signal received from an instrument controller. The controller is arranged to vary the total throughflow cross-section of the trim stack 18 which is available for fluid flow between the inlet port 14 and the outlet port 16 by way of the valve plug 20 in dependence on a control feedback signal from a transducer (not shown) arranged to sense the fluid pressure or flow downstream of the trim stack 18, in order to control the fluid pressure or flow downstream of the valve 10 within an acceptable range.

## Claims

1. A high energy flow control device comprising flow control means having a series of passageways therethrough for flow of fluid between an inner space and an outer space, wherein the passageways impart repeated changes of direction to the fluid flows passing therealong, and wherein the passageways communicate with transversely extending intermediate channels within the flow control means in order to permit interaction between the fluid flows along adjacent passageways by way of the channels.

2. A flow control device according to claim 1, wherein the flow control means is annular, and the intermediate channels are coaxial annular channels.

3. A flow control device according to claim 2, wherein the passageways follow tortuous paths extending generally radially with respect to the flow control means.

4. A flow control device according to claim 1, 2 or 3, wherein the passageways follow paths having tortuous profiles in two mutually transverse planes.

5. A flow control device according to any preceding claim, wherein the channels are provided on opposite sides of an apertured plate and communicate with one another by way of apertures extending through the apertured plate.

6. A flow control device according to claim 5, wherein a plurality of said channels are provided on each side of the apertured plate, the channels on each side of the apertured plate being separated from one another by dividing walls.

7. A flow control device according to claim 6, the width of the channels on each side of the apertured plate increases progressively in the general direction of flow.

8. A flow control device according to claim 6 or 7, wherein each of said channels on one side of the apertured plate communicates with (i) one of said channels on the other side of the apertured plate by means of equidistantly spaced first apertures in the apertured plate, and (ii) a further one of said channels on the other side of the apertured plate, adjacent to said one channel, by means of equidistantly spaced second apertures in the apertured plate offset relative to the first apertures.

9. A flow control device according to claim 5, 6, 7 or 8, wherein said channels on opposite sides of the apertured plate are bounded by two blanking plates arranged on opposite sides of the apertured plate and extending substantially parallel thereto.

10. A flow control device according to claim 9, wherein the flow control means comprises a stack of annular plates consisting of apertured plates and blanking plates arranged alternately and defining said channels therebetween.

11. A flow control device according to any preceding claim, wherein a valve plug is axially adjustable within the inner space in order to vary the number of passageways available for fluid flow between the inner space and the outer space.

12. A flow control device according to any preceding claim, which is a pressure control valve for controlling the pressure of a high energy flow of fluid by dissipation of fluid flow energy in dependence on the sensed pressure or flow externally of the valve.

13. A high energy flow control device comprising flow control means having a series of passageways therethrough for flow of fluid between an inner space and an outer space such that the passageways impart repeated changes of direction to the fluid flows passing therealong, wherein the passageways communicate with transverse channels on opposite sides of an apertured plate which are in communication with one another by way of apertures extending through the apertured plate, wherein adjacent channels on the same side of the plate are separated by dividing walls, and wherein at least one channel on one side of the plate communicates with each of two adjacent channels on the opposite side of the plate by way of apertures through the apertured plate such that the apertures providing communication with one of said two channels are offset along said at least one channel relative to the apertures providing communication with the other of said two channels.
